# EUROPÄISCHE PATENTSCHRIFT

(11) **EP 3 181 827 B1**
(45) Veröffentlichungstag und Bekanntmachung des Hinweises auf die Patenterteilung: **03.03.2021**
(21) Anmeldenummer: 15199978.6
(22) Anmeldetag: 15.12.2015
(51) Int. Cl.: F01D 11/00, F01D 25/24

(54) **TURBOMASCHINEN-BAUTEILVERBINDUNG**
TURBOMACHINE COMPONENT CONNECTION
CONNEXION ENTRE COMPOSANTS DE TURBOMACHINE

(43) Veröffentlichungstag der Anmeldung: 21.06.2017
(73) Patentinhaber: MTU Aero Engines AG, 80995 München (DE)
(72) Erfinder: Klötzer, Alexander, 82256 Fürstenfeldbruck (DE); Feldmann, Manfred, 82223 Eichenau (DE)

(56) Entgegenhaltungen:
- EP-A2- 1 340 885
- WO-A2-2011/088819
- US-A- 5 118 120
- US-A1- 2009 169 369
- US-B1- 6 464 457

## Beschreibung

Die vorliegende Erfindung betrifft eine Bauteilverbindung mit einem Turbomaschinen-Bauteil und einem damit verbundenen Turbomaschinen-Gegenbauteil sowie ein Verfahren zur Montage der Bauteilverbindung.

Aus betriebsinterner Praxis ist es bekannt, Bauteilverbindungen von Turbomaschinen gegeneinander abzudichten. Insbesondere bei Gasturbinen ist es dabei aus betriebsinterner Praxis bekannt, Dichtbleche zu verwenden, die den zum Teil sehr hohen Temperaturen widerstehen. US 5118120 offenbart zum Beispiel Merkmale der Präambel des Anspruchs 1.

Eine Aufgabe einer Ausführung der vorliegenden Erfindung ist es, eine Bauteilverbindung bzw. deren Montage zu verbessern.

Diese Aufgabe wird durch eine Bauteilverbindung mit den Merkmalen des Anspruchs 1 bzw. ein Verfahren mit den Merkmalen des Anspruchs 16 gelöst. Vorteilhafte Ausführungsformen der Erfindung sind Gegenstand der Unteransprüche.

Nach einer Ausführung der vorliegenden Erfindung weist eine Bauteilverbindung ein erstes Bauteil für eine Turbomaschine, insbesondere ein erstes Bauteil einer Turbomaschine, auf, das nachfolgend zur Unterscheidung und ohne Beschränkung der Allgemeinheit als ein bzw. das Turbomaschinen-Bauteil oder auch kurz Bauteil bezeichnet wird.

In einer Ausführung kann das Turbomaschinen-Bauteil insbesondere ein Bauteil für eine Gasturbine, insbesondere eine Verdichter- oder eine Turbinenstufe und/oder ein Gehäuse und/oder ein Flugtriebwerk, insbesondere ein Bauteil einer Gasturbine, insbesondere einer Verdichter- oder einer Turbinenstufe und/oder eines Gehäuses und/oder eines Flugtriebwerks, sein.

Insbesondere bei solchen Bauteilen kann eine Abdichtung nach einer Ausführung der vorliegenden Erfindung, insbesondere zur Führung von Kühlluft, rückgeführter Verdichterluft oder dergleichen, vorteilhaft sein.

Nach einer Ausführung der vorliegenden Erfindung weist das Turbomaschinen-Bauteil einen oder mehrere, insbesondere nebeneinander angeordnete und/oder voneinander, insbesondere in einer Umfangsrichtung um eine (Haupt)Maschinenachse der Turbomaschine, beabstandete Bauteilflansche auf.

Nach einer Ausführung der vorliegenden Erfindung weist die Bauteilverbindung ein zweites Bauteil für die bzw. der Turbomaschine auf, das nachfolgend zur Unterscheidung und ohne Beschränkung der Allgemeinheit als ein bzw. das Turbomaschinen-Gegenbauteil oder auch kurz Gegenbauteil bezeichnet wird.

Dieses ist bzw. wird nach einer Ausführung der vorliegenden Erfindung mit dem Turbomaschinen-Bauteil, insbesondere zerstörungsfrei lösbar, verbunden, insbesondere verschraubt, und weist einen oder mehrere, insbesondere nebeneinander angeordnete und/oder voneinander, insbesondere in Umfangsrichtung um die (Haupt)Maschinenachse der Turbomaschine, beabstandete Flansche auf, die nachfolgend zur Unterscheidung und ohne Beschränkung der Allgemeinheit als Gegenbauteilflansch(e) bezeichnet werden. In einer Ausführung sind bzw. werden ein oder mehrere Bauteilflansche (jeweils) mit einem oder mehreren Gegenbauteilflanschen, insbesondere zerstörungsfrei lösbar, verbunden, insbesondere verschraubt.

Nach einer Ausführung der vorliegenden Erfindung weist die Bauteilverbindung ein oder mehrere Dichtmittel zur Abdichtung eines bauteilseitigen Überdrucks auf, das bzw. die (jeweils) eine Dichtfläche aufweisen, die, insbesondere radial, in eine, insbesondere dieselbe und/oder radiale, Nut des Bauteils eingreifen, welche auf einer gegenbauteilflanschzugewandten Seite des entsprechenden, insbesondere dem (jeweiligen) Dichtmittel axial gegenüberliegenden, Bauteilflansch angeordnet ist und eine Anlagefläche zur dichtenden axialen Abstützung der Dichtfläche aufweist.

Hierdurch können in einer Ausführung vorteilhaft das bzw. die Dichtmittel von der gegenbauteilflanschzugewandten Seite des bzw. der Bauteilflansche her montiert werden, was insbesondere die Montage erleichtern kann.

Unter einem bauteilseitigen Überdruck wird vorliegend insbesondere ein Überdruck auf der dem Bauteilflansch zu- bzw. dem Gegenbauteilflansch abgewandten Seite des Dichtmittels verstanden.

Die Anlagefläche kann insbesondere eine, insbesondere gegenbauteilnähere, Flanke bzw. Wand der Nut sein.

"Axial" bezeichnet vorliegend in einer Ausführung eine Richtung senkrecht zur Dicht- bzw. Anlagefläche, "radial" entsprechend in einer Ausführung eine Richtung parallel zur Dicht- bzw. Anlagefläche. Zusätzlich oder alternativ bezeichnet "axial" vorliegend in einer Ausführung eine Richtung einer (Längs)Achse eines Bauteil(flansch) und Gegenbauteil(flansch) verbindenden Bolzens, der eine Öffnung des Dichtmittels durchgreift, "radial" entsprechend in einer Ausführung eine Richtung senkrecht hierzu. Somit können in einer Ausführung Dicht- und Anlagefläche insbesondere, wenigstens im Wesentlichen, senkrecht zur (Längs)Achse eines Bauteil(flansch) und Gegenbauteil(flansch) verbindenden Bolzens sein. In einer Ausführung kann "axial" und "radial" sich insbesondere (auch) auf eine (Haupt)Maschinenachse der Turbomaschine beziehen.

Unter einer dichtenden axialen Abstützung wird in einer Ausführung ein wenigstens im Wesentlichen fluid-, insbesondere luftdichter Kontakt der Dichtfläche mit der Anlagefläche verstanden, wobei die Dichtfläche sich unter dem bauteilseitigen Überdruck auf der Anlagefläche axial formschlüssig abstützt und dabei den bauteilseitigen Überdruck abdichtet. Entsprechend sind in einer Ausführung Dicht- und Anlagefläche(n) zur dichtenden axialen Abstützung eines bzw. des bauteilseitigen Überdrucks vorgesehen bzw. eingerichtet.

Es sind bzw. werden der bzw. die Bauteil- und Gegenbauteilflansch(e) durch einen oder mehrere Bolzen zerstörungsfrei lösbar oder nicht-zerstörungsfrei-lösbar miteinander verbunden, insbesondere verschraubt, der bzw. die (jeweils) eine Öffnung, insbesondere Durchgangsbohrung, des Dichtmittels bzw. eines oder mehrerer der Dichtmittel durchgreift. Dabei kann insbesondere wenigstens ein Bolzen (jeweils) eine Öffnung genau eines oder mehrerer Dichtmittel durchgreifen.

Hierdurch können in einer Ausführung das bzw. die Dichtmittel vorteilhaft beim bzw. durch das Verbinden von Bauteil- und Gegenbauteilflansch befestigt werden.

Wenigstens ein Bolzen kann in einer Weiterbildung integral mit dem entsprechenden Bauteil(flansch) oder Gegenbauteil(flansch) ausgebildet oder zerstörungsfrei lösbar oder nicht-zerstörungsfrei-lösbar mit diesem verbunden werden bzw. sein. Insbesondere kann der Bolzen ein mit dem Bauteil(flansch) oder Gegenbauteil(flansch) verschraubter Stehbolzen sein.

In einer Ausführung durchgreift der Bolzen eine Hülse, die ihrerseits die Öffnung, insbesondere Durchgangsbohrung, des Dichtmittels bzw. eines oder mehrerer der Dichtmittel durchgreift. Die Hülse kann in einer Weiterbildung, insbesondere reibschlüssig, in eine Öffnung, insbesondere Durchgangsbohrung, des Bauteil- und/oder des Gegenbauteilflanschs eingreifen. In einer Weiterbildung ist bzw. wird der die Hülse durchgreifende Bolzen durch einen bauteilflanschfesten Anschlag axial gesichert und/oder durch die Hülse zentriert.

In einer Ausführung wird bzw. ist der Bolzen, insbesondere auf einer bauteilflanschabgewandten Seite des Gegenbauteilflanschs, mit einer Mutter verschraubt.

Hierdurch kann in einer Ausführung jeweils insbesondere die Montage erleichtert werden.

In einer Ausführung weisen das bzw. eines oder mehrere der Dichtmittel (jeweils) eine oder mehrere Öffnungen, insbesondere Durchgangsbohrungen, auf, die (jeweils) auf einem bauteilfesten, insbesondere bauteilflanschfesten, Absatz radial gesichert, insbesondere zentriert, sind bzw. werden, insbesondere (jeweils) von einem bauteilfesten, insbesondere bauteilflanschfesten, Absatz durchgriffen sind bzw. werden.

In einer Weiterbildung kann der bauteil(flansch)feste Absatz integral mit dem Bauteil, insbesondere Bauteilflansch ausgebildet oder zerstörungsfrei lösbar oder nicht-zerstörungsfrei-lösbar mit diesem verbunden werden bzw. sein. In einer Weiterbildung kann der Absatz insbesondere an der die Öffnung des Dichtmittels durchgreifenden Hülse ausgebildet sein.

Hierdurch kann in einer Ausführung insbesondere die Montage erleichtert, insbesondere das Dichtmittel während der Montage gesichert werden.

In einer Ausführung ist eine radiale Höhe eines bzw. des in die Nut eingreifenden Dichtelementbereichs, insbesondere eine radiale Höhe der in die Nut eingreifenden Dichtfläche, wenigstens gleich einer radialen Höhe des bauteilfesten Absatzes, insbesondere größer als eine radiale Höhe des bauteilfesten Absatzes.

Unter einer radialen Höhe eines bzw. des in die Nut eingreifenden Dichtelementbereichs, insbesondere einer radiale Höhe der in die Nut eingreifenden Dichtfläche, wird insbesondere die, insbesondere maximale oder minimale, radiale Überlappung zwischen dem Dichtelement bzw. der Dichtfläche und der Nut, insbesondere Anlagefläche, verstanden. Unter einer radialen Höhe des bauteilfesten Absatzes wird insbesondere ein radialer Versatz zur Nut hin verstanden, um den das Dichtelement beim Anordnen auf dem Absatz zur Nut hin verschoben werden muss bzw. durch den Absatz formschlüssig bzw. zwangsgeführt verschoben wird, wenn die Dichtfläche in die Nut eingefädelt wird. Mit anderen Worten wird unter einer radialen Höhe des bauteilfesten Absatzes insbesondere ein radialer Versatz von der Nut weg verstanden, um den das Dichtelement beim Abziehen von dem Absatz von der Nut weg radial verschoben werden kann. Ist in einer Weiterbildung der Absatz stufenförmig (ausgebildet), so kann die radiale Höhe des bauteilfesten Absatzes entsprechend insbesondere die radiale Stufenhöhe in Richtung auf die Nut zu auf den Absatz sein.

Hierdurch kann in einer Ausführung insbesondere die Montage erleichtert, insbesondere das Dichtmittel während der Montage gesichert werden.

In einer Ausführung wird bzw. ist das Dichtmittel axial zwischen dem bzw. den Bauteil- und dem bzw. den Gegenbauteilflansch(en) mit axialem Spiel oder ohne axiales Spiel und/oder mit radialem oder ohne radiales Spiel angeordnet, insbesondere auf dem bzw. den bauteilfesten Absätzen, insbesondere dem bzw. den Absätzen der Hülse(n). Entsprechend ist bzw. wird in einer Ausführung das Dichtmittel auf dem bauteilfesten Absatz mit oder ohne radiales Bewegungsspiel festgelegt bzw. radial (formschlüssig) gesichert. Prinzipiell ist es aus Gesichtsgründen der Dichtigkeit vorteilhaft, zumindest das radiale Spiel so gering wie möglich zu halten. Jedoch ist es wegen der notwendigen Toleranzen und den unterschiedlichen Wärmeausdehnungen der Teile im Betrieb der Turbomaschine nicht möglich, völlig ohne Spiel auszukommen.

Durch eine Anordnung mit Spiel können in einer Ausführung vorteilhaft Montage- und/oder Fertigungstoleranzen und/oder unterschiedliche thermische Deformationen, insbesondere der Flansche und/oder des Dichtmittels, kompensiert werden. Durch eine Anordnung ohne (Bewegungs)Spiel kann in einer Ausführung das Dichtmittel in einer gewünschten Position fixiert werden.

In einer Ausführung weisen das bzw. die Dichtmittel (jeweils) eine Gegendichtfläche zur dichtenden axialen Abstützung an einer Gegenanlagefläche des Gegenbauteils auf.

Entsprechend stützt sich die Gegendichtfläche in einer Ausführung unter dem bauteilseitigen Überdruck auf der Gegenanlagefläche axial formschlüssig ab und dichtet dabei den bauteilseitigen Überdruck ab bzw. sind Gegendicht- und -anlagefläche(n) zur dichtenden axialen Abstützung eines bzw. des bauteilseitigen Überdrucks vorgesehen bzw. eingerichtet. In einer Ausführung sind Dicht- und Gegendichtfläche auf einander gegenüberliegenden Seiten der bolzendurchgriffenen Öffnung(en), insbesondere Durchgangsbohrungen, des (jeweiligen) Dichtmittels angeordnet.

Hierdurch kann in einer Ausführung eine vorteilhafte Abdichtung, insbesondere Luft(ab)dichtung, realisiert sein bzw. werden.

In einer Ausführung weisen das bzw. eines oder mehrere der Dichtmittel Metall auf, in einer Weiterbildung können das bzw. eines oder mehrere der Dichtmittel aus Metall hergestellt sein. Hierdurch kann in einer Ausführung die Dichtung auch höheren Temperaturen widerstehen, insbesondere solchen, die in Verdichtern oder Turbinen von Gasturbinen, insbesondere Flugtriebwerken, auftreten.

In einer Ausführung sind bzw. werden das bzw. eines oder mehrere der Dichtmittel blechförmig bzw. als Dichtblech ausgebildet. Ein Dichtblech kann insbesondere eine (axiale) Wandstärke aufweisen, die höchstens 10% einer Erstreckung des Dichtblechs in zwei zur Wandstärkenrichtung und zueinander senkrechten Richtungen und/oder wenigstens 0,1 mm und/oder höchstens 1 mm beträgt.

Hierdurch kann in einer Ausführung eine vorteilhafte Abdichtung realisiert werden.

In einer Ausführung sind bzw. werden das bzw. eines oder mehrere der Dichtmittel gerade oder gebogen, insbesondere kreisringsegmentförmig, ausgebildet.

In einer Ausführung überlappen wenigstens zwei nebeneinander angeordnete Dichtmittel einander. Alternativ oder zusätzlich ist es auch möglich, dass in axialer Richtung vor oder hinter zwei in Umfangsrichtung benachbarten Dichtmitteln ein weiteres Dichtmittel angeordnet ist, und zwar derart, dass das weitere Dichtmittel den Spalt zwischen den beiden in Umfangsrichtung benachbarten Dichtmitteln überdeckt.

Hierdurch kann in einer Ausführung insbesondere die Montage erleichtert werden. Dabei kann ein überlappender Rand eines Dichtmittels insbesondere (axial) gekröpft bzw. abgestuft ausgebildet sein, so dass dieses Dichtmittel einerseits an Anlage- und Gegenanlagefläche und andererseits an dem benachbarten Dichtmittel dichtend anliegen kann.

In einer Ausführung stützen sich die Dichtfläche(n) des bzw. der Dichtmittel unter bauteilseitigem Überdruck (jeweils) dichtend axial auf der Anlagefläche ab bzw. sind hierzu vorgesehen bzw. eingerichtet. In einer Weiterbildung stützen sich die Gegendichtfläche(n) des bzw. der Dichtmittel unter bauteilseitigem Überdruck (jeweils) dichtend axial auf der Gegenanlagefläche ab bzw. sind hierzu vorgesehen bzw. eingerichtet.

Nach einer Ausführung der vorliegenden Erfindung umfasst ein Verfahren zur Montage einer hier beschriebenen Bauteilverbindung die Schritte:
- Einfädeln der Dichtfläche des bzw. der Dichtmittel in die (jeweilige, insbesondere dieselbe) Nut des Bauteils; und
- Verbinden des bzw. der Bauteilflansche mit dem bzw. den Gegenbauteilflanschen.

In einer Ausführung wird ein Dichtmittel (jeweils) auf den bzw. die Absätze bzw. Bolzen bzw. die Hülse(n) aufgeschoben und dabei seine Dichtfläche radial in die Nut eingeführt, insbesondere unter Kippen des Dichtmittels. In einer Weiterbildung sind das Dichtmittel und das Bauteil, insbesondere seine Nut, und der bauteilfeste Absatz derart ausgebildet, insbesondere dimensioniert, dass die Dichtfläche nur in einer gegen die axiale Richtung gekippte Lage des Dichtmittels in die Nut eingeführt bzw. - fädelt werden und das Dichtmittel (erst bzw. nur) bei in die Nut eingeführter Dichtfläche (wieder) senkrecht zur axiale Richtung angeordnet, insbesondere auf dem bauteilfesten Absatz radial gesichert, sein bzw. werden kann.

Dann werden in einer Ausführung der bzw. die Gegenbauteilflansche auf den bzw. die Bolzen aufgeschoben und insbesondere mittels Mutter(n) verschraubt.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil einer Bauteilverbindung nach einer Ausführung der vorliegenden Erfindung in perspektivischer Ansicht;
- Fig. 2: einen axialen Schnitt der Bauteilverbindung; und
- Fig. 3: einen Schritt eines Verfahrens zur Montage der Bauteilverbindung nach einer Ausführung der vorliegenden Erfindung.

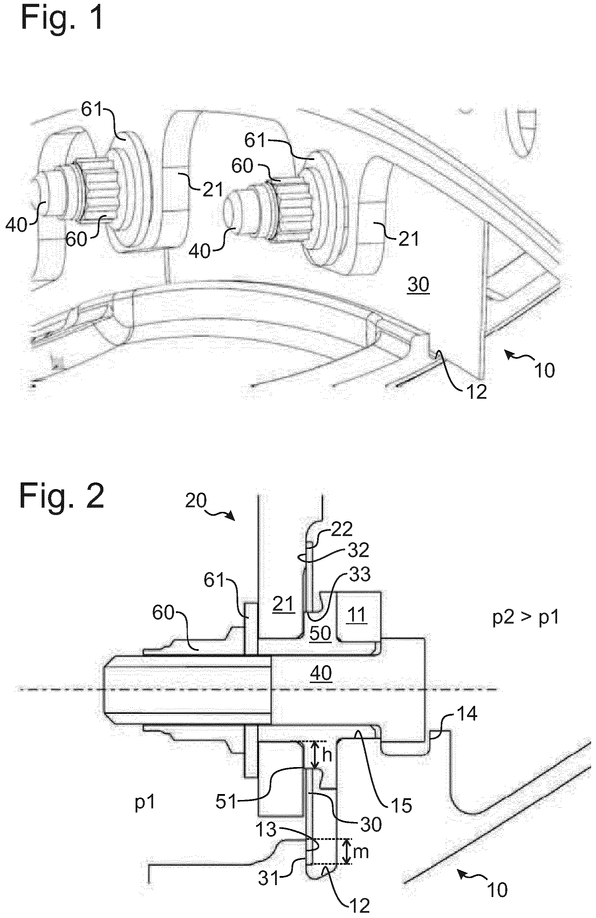

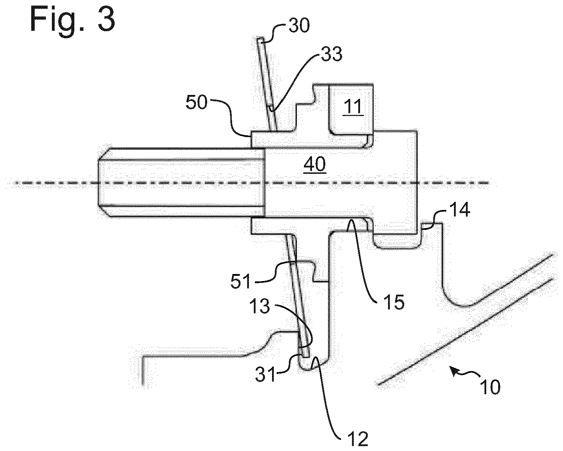

Bezugnehmend auf Fig. 3 wird zur Montage der in Fig. 1, 2 fertig montiert gezeigten Bauteilverbindung nach einer Ausführung der vorliegenden Erfindung zunächst eine Dichtfläche 31 eines kreisringsegmentförmigen Dichtmittels in Form eines Dichtblechs 30 aus Metall in eine Nut 12 eines Turbomaschinen-Bauteils 10, das einen Bauteilflansch 11 aufweist, eingefädelt, so dass die Dichtfläche 31 radial (bezogen auf eine in Fig. 3 strichpunktierte Bolzenlängsachse) in die Nut 12 eingreift.

Die Nut 12 ist auf einer gegenbauteilflanschzugewandten Seite (links in Fig. 2, 3) des Bauteilflanschs 11 angeordnet und weist eine Anlagefläche 13 zur dichtenden axialen Abstützung der Dichtfläche 31 auf.

Mehrere Bolzen 40, von denen in Fig. 1 zwei und in Fig. 2, 3 einer dargestellt ist, durchgreifen jeweils eine Hülse 50 und sind durch einen Absatz 14 des Turbomaschinen-Bauteils 10 axial gesichert und durch die Hülse 50 in einer Durchgangsbohrung 15 des Bauteilflanschs 11 zentriert.

Die Hülsen 50 weisen jeweils einen Absatz 51 auf, der aufgrund der Befestigung der Hülse 50 an dem Bauteilflansch 11 bauteil(flansch)fest ist.

Beim Einfädeln der Dichtfläche 31 in die Nut 12 werden Durchgangsbohrungen 33 des Dichtblechs 30 auf die Absätze 51 der Hülsen 50 aufgeschoben (vgl. hierzu Fig. 2), so dass das Dichtblech 30 bzw. seine Durchgangsbohrungen 33 auf den bauteilfesten Absätzen 51 radial gesichert sind.

Anschließend (vgl. hierzu Fig. 2) werden Gegenbauteilflansche 21 eines Turbomaschinen-Gegenbauteils 20 mit dem Bauteilflansch 11 verschraubt, indem Muttern 60 auf die Bolzen 40 aufgeschraubt werden, wobei zwischen den Muttern 60 und den Gegenbauteilflanschen 21 Unterlegscheiben 61 angeordnet sind bzw. werden.

In dem solcherart, in Fig. 1, 2 gezeigten, fertig montierten Zustand ist das Dichtblech 30, wie insbesondere in Fig. 2 erkennbar, axial zwischen dem Bauteilflansch 11 und den Gegenbauteilflanschen 21 mit axialem (Bewegungs)Spiel angeordnet und radial gesichert, insbesondere zentriert.

Es weist eine Gegendichtfläche 32 auf.

Durch einen bauteilseitigen Überdruck Δp = p2 - p1 > 0 wird das Dichtblech 30 im Betrieb mit seiner Dichtfläche 31 gegen die Anlagefläche 13 und mit seiner Gegendichtfläche 32 gegen eine Gegenanlagefläche 22 am Turbomaschinen-Gegenbauteil 20 gepresst, so dass sich unter dem bauteilseitigen Überdruck Δp die Dichtfläche 31 dichtend axial auf der Anlagefläche 13 und die Gegendichtfläche 32 dichtend axial auf der Gegenanlagefläche 22 abstützen.

Man erkennt in Fig. 2, dass die radiale Höhe m der in die Nut 12 eingreifenden Dichtfläche maximal gleich der radialen Höhe h des bauteilfesten Absatzes 51 ist.

In Fig. 1 erkennt man zwischen zwei in Umfangsrichtung benachbarten Dichtmitteln 30 einen Spalt oder Schlitz, der sich in radialer Richtung erstreckt. Dieser kann vorteilhaft dadurch abgedichtet werden, dass in axialer Richtung hinter (rechts in Fig. 2) den beiden in Umfangsrichtung benachbarten Dichtmitteln 30 ein weiteres, hier nicht dargestelltes Dichtmittel 30 angeordnet wird, welches vorzugsweise flächig an den beiden in Umfangsrichtung benachbarten Dichtmitteln 30 anliegt und von Überdruck gegen diese gepresst wird.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Turbomaschinen-Bauteil
- 11: Bauteilflansch
- 12: Nut
- 13: Anlagefläche
- 14: Absatz
- 15: Durchgangsbohrung
- 20: Turbomaschinen-Gegenbauteil
- 21: Gegenbauteilflansch
- 22: Gegenanlagefläche
- 30: Dichtblech
- 31: Dichtfläche
- 32: Gegendichtfläche
- 33: Durchgangsbohrung
- 40: Bolzen
- 50: Hülse
- 51: Absatz
- 60: Mutter
- 61: Unterlegscheibe
- p2 - p1: Überdruck
- m: radiale Höhe der Dichtfläche
- h: radiale Höhe des Hülsenabsatzes

## Patentansprüche

1. Bauteilverbindung mit:
einem Turbomaschinen-Bauteil (10), das wenigstens einen Bauteilflansch (11) aufweist;
einem damit verbundenen Turbomaschinen-Gegenbauteil (20), das wenigstens einen Gegenbauteilflansch (21) aufweist; und
wenigstens einem Dichtmittel (30) zur Abdichtung eines bauteilseitigen Überdrucks (p2-p1), das eine Dichtfläche (31) aufweist, die in eine Nut (12) des Turbomaschinen-Bauteils (10) eingreift, welche auf einer gegenbauteilflanschzugewandten Seite des Bauteilflanschs (11) angeordnet ist und eine Anlagefläche (13) zur dichtenden axialen Abstützung der Dichtfläche (31) aufweist, wobei wenigstens ein Bolzen (40) eine Öffnung (33) des Dichtmittels durchgreift,
**dadurch gekennzeichnet, dass** Bauteil- und Gegenbauteilflansch durch den wenigstens einen Bolzen (40) zerstörungsfrei lösbar oder nicht-zerstörungsfrei-lösbar miteinander verbunden sind.

2. Bauteilverbindung nach dem vorhergehenden Anspruch, **dadurch gekennzeichnet, dass** Bauteil- und Gegenbauteilflansch durch den wenigstens einen Bolzen (40) miteinander verschraubt sind.

3. Bauteilverbindung nach dem vorhergehenden Anspruch, **dadurch gekennzeichnet, dass** der Bolzen eine Hülse (50) durchgreift, die die Öffnung des Dichtmittels durchgreift.

4. Bauteilverbindung nach einem der vorhergehenden Ansprüche, **dadurch gekennzeichnet, dass** das Dichtmittel wenigstens eine Öffnung (33) aufweist, die auf einem bauteilfesten Absatz (51) radial gesichert ist.

5. Bauteilverbindung nach dem vorhergehenden Anspruch, **dadurch gekennzeichnet, dass** eine radiale Höhe (m) eines in die Nut eingreifenden Dichtelementbereichs (13) maximal gleich einer radialen Höhe (h) des bauteilfesten Absatzes (51) ist.

6. Bauteilverbindung nach einem der vorhergehenden Ansprüche, **dadurch gekennzeichnet, dass** das Dichtmittel (30) axial zwischen dem Bauteil- und dem Gegenbauteilflansch (11, 21) mit oder ohne axiales und/oder radiales Spiel angeordnet ist.

7. Bauteilverbindung nach einem der vorhergehenden Ansprüche, **dadurch gekennzeichnet, dass** das Dichtmittel eine Gegendichtfläche (32) zur dichtenden axialen Abstützung an einer Gegenanlagefläche (22) des Gegenbauteils aufweist.

8. Bauteilverbindung nach einem der vorhergehenden Ansprüche, **dadurch gekennzeichnet, dass** das Dichtmittel Metall aufweist.

9. Bauteilverbindung nach einem der vorhergehenden Ansprüche, **dadurch gekennzeichnet, dass** das Dichtmittel blechförmig ausgebildet ist.

10. Bauteilverbindung nach einem der vorhergehenden Ansprüche, **dadurch gekennzeichnet, dass** das Dichtmittel gerade oder gebogen, insbesondere kreisringsegmentförmig, ausgebildet ist.

11. Bauteilverbindung nach einem der vorhergehenden Ansprüche, **dadurch gekennzeichnet, dass** das Bauteil mehrere voneinander beabstandete Bauteilflansche und/oder das Gegenbauteil mehrere voneinander beabstandete Gegenbauteilflansche (21) aufweist.

12. Bauteilverbindung nach einem der vorhergehenden Ansprüche, **dadurch gekennzeichnet, dass** wenigstens zwei der Dichtmittel einander überlappen.

13. Bauteilverbindung nach einem der vorhergehenden Ansprüche, **dadurch gekennzeichnet, dass** die Dichtfläche sich unter bauteilseitigem Überdruck (p2-p1) dichtend axial auf der Anlagefläche (13) abstützt.

14. Bauteilverbindung nach einem der vorhergehenden Ansprüche, **dadurch gekennzeichnet, dass** das Turbomaschinen-Bauteil ein Bauteil für eine Gasturbine, insbesondere eine Verdichter- oder eine Turbinenstufe und/oder ein Gehäuse und/oder ein Flugtriebwerk, ist.

15. Turbomaschine, insbesondere Gasturbine, mit einer Bauteilverbindung nach einem der vorhergehenden Ansprüche.

16. Verfahren zur Montage einer Bauteilverbindung nach einem der vorhergehenden Ansprüche, mit den Schritten:
Einfädeln der Dichtfläche (31) des wenigstens einen Dichtmittels (30) in die Nut (12) des Turbomaschinen-Bauteils (10); und
Verbinden des wenigstens einen Bauteilflanschs (11) mit dem wenigstens einen Gegenbauteilflansch (21) durch den wenigstens einen Bolzen (40), der die Öffnung (33) des Dichtmittels durchgreift.

## Claims

1. Component connection comprising:
a turbomachine component (10) which has at least one component flange (11);
a turbomachine mating component (20) which is connected thereto and has at least one mating component flange (21); and
at least one sealing means (30) for sealing against overpressure (p2-p1) on the component side, which sealing means has a sealing surface (31) that engages in a groove (12) in the turbomachine component (10), which groove is arranged on a side of the component flange facing the mating component flange (11) and has a contact surface (13) for sealingly axially supporting the sealing surface (31), at least one bolt (40) passing through an opening (33) in the sealing means, **characterized in that** the component flange and the mating component flange are interconnected by means of the at least one bolt (40) in a non-destructively releasable or destructively releasable manner.

2. Component connection according to the preceding claim, **characterized in that** the component flange and the mating component flange are screwed together by means of the at least one bolt (40).

3. Component connection according to the preceding claim, **characterized in that** the bolt passes through a sleeve (50) which passes through the opening in the sealing means.

4. Component connection according to any of the preceding claims, **characterized in that** the sealing means has at least one opening (33) which is secured radially on a shoulder (51) fixed to the component.

5. Component connection according to the preceding claim, **characterized in that** a radial height (m) of a sealing element region (13) engaging in the groove is at most equal to a radial height (h) of the shoulder (51) fixed to the component.

6. Component connection according to any of the preceding claims, **characterized in that** the sealing means (30) is arranged axially between the component flange and the mating component flange (11, 21)with or without axial and/or radial play.

7. Component connection according to any of the preceding claims, **characterized in that** the sealing means has a mating sealing surface (32) for sealing axial support on a mating contact surface (22) of the mating component.

8. Component connection according to any of the preceding claims, **characterized in that** the sealing means comprises metal.

9. Component connection according to any of the preceding claims, **characterized in that** the sealing means is sheet-shaped.

10. Component connection according to any of the preceding claims, **characterized in that** the sealing means is straight or curved, in particularcircular-ring-segment-shaped.

11. Component connection according to any of the preceding claims, **characterized in that** the component has a plurality of mutually spaced component flanges and/or the mating component has a plurality of mutually spaced mating component flanges (21).

12. Component connection according to any of the preceding claims, **characterized in that** at least two of the sealing means overlap one another.

13. Component connection according to any of the preceding claims, **characterized in that** the sealing surface is sealingly axially supported on the contact surface (13) under overpressure (p2-p1) on the component side.

14. Component connection according to any of the preceding claims, **characterized in that** the turbomachine component is a component for a gas turbine, in particular a compressor stage or a turbine stage and/or a housing and/or an aircraft engine.

15. Turbomachine, in particular a gas turbine, comprising at least one component connection according to any of the preceding claims.

16. Method for assembling a component connection according to any of the preceding claims, comprising the steps of:
threading the sealing surface (31) of the at least one sealing means (30) into the groove (12) of the turbomachine component (10); and
connecting the at least one component flange (11) to the at least one mating component flange (21) by means of the at least one bolt (40) which passes through the opening (33) in the sealing means.

## Revendications

1. Liaison de composants comportant :
un composant de turbomachine (10) présentant au moins une bride de composant (11) ;
un composant complémentaire de turbomachine (20) relié à celui-ci, lequel composant complémentaire de turbomachine présente au moins une bride de composant complémentaire (21) ; et
au moins un moyen d'étanchéité (30) permettant d'étanchéifierune surpression (p2-p1) côté composant, lequel moyen d'étanchéité présente une surface d'étanchéité (31) qui vient en prise dans une rainure (12) du composant de turbomachine (10) disposée sur un côté de la bride de composant (11) faisant face à la bride de composant opposée, et lequel moyen d'étanchéité présente une surface de contact (13) permettant le support axial étanchéifiant de la surface d'étanchéité (31), au moins un boulon (40) traversant une ouverture (33) du moyen d'étanchéité, **caractérisée en ce que** le composant et la bride de composant complémentaire sont reliés l'un à l'autre de manière amovible non destructrice ou de manière amovible destructrice parl'au moins un boulon (40).

2. Liaison de composants selon la revendication précédente, **caractérisée en ce que** la bride de composant et la bride de composant complémentaire sont vissées ensemble par l'au moins un boulon (40).

3. Liaison de composants selon la revendication précédente, **caractérisée en ce que** le boulon traverse une douille (50) qui traverse l'ouverture du moyen d'étanchéité.

4. Liaison de composants selon l'une des revendications précédentes, **caractérisée en ce que** le moyen d'étanchéité présente au moins une ouverture (33) qui est sécurisée radialement sur un épaulement (51) solidaire du composant.

5. Liaison de composants selon la revendication précédente, **caractérisée en ce qu'**une hauteur radiale (m) d'une zone d'élément d'étanchéité (13) venant en prise dans la rainure est au plus égale à une hauteur radiale (h) de l'épaulement (51) solidaire du composant.

6. Liaison de composants selon l'une des revendications précédentes, **caractérisée en ce que** le moyen d'étanchéité (30) est disposé axialement entre la bride de composant et la bride de composant complémentaire (11, 21) avecou sans jeu axial et/ou radial.

7. Liaison de composants selon l'une des revendications précédentes, **caractérisée en ce que** le moyen d'étanchéité présente une surface d'étanchéité complémentaire (32) permettant le support axial étanchéifiant sur une surface de contact complémentaire (22) du composant complémentaire.

8. Liaison de composants selon l'une des revendications précédentes, **caractérisée en ce que** le moyen d'étanchéité présente du métal.

9. Liaison de composants selon l'une des revendications précédentes, **caractérisée en ce que** le moyen d'étanchéité est en forme de tôle.

10. Liaison de composants selon l'une des revendications précédentes, **caractérisée en ce que** le moyen d'étanchéité est rectiligne ou courbe, en particulier sous la forme d'un segment d'anneau circulaire.

11. Liaison de composants selon l'une des revendications précédentes, **caractérisée en ce que** le composant présente plusieurs brides de composant espacées les unes des autres et/ou que le composant complémentaire présente plusieurs brides de composant complémentaire (21) espacées les unes des autres.

12. Liaison de composants selon l'une des revendications précédentes, **caractérisée en ce qu'**au moins deux des moyens d'étanchéité se chevauchent.

13. Liaison de composants selon l'une des revendications précédentes, **caractérisée en ce que** la surface d'étanchéité est supportée axialement de manière étanchéifiante sur la surface de contact (13) sous surpression (p2-p1) côté composant.

14. Liaison de composants selon l'une des revendications précédentes, **caractérisée en ce que** le composant de turbomachine est un composant destiné à une turbine à gaz, en particulier à un étage de compresseur ou à un étage de turbine et/ou à un carter et/ou à un moteur d'avion.

15. Turbomachine, en particulier turbine à gaz, comportant une liaison de composants selon l'une des revendications précédentes.

16. Procédé de montage d'une liaison de composants selon l'une des revendications précédentes, comportant les étapes suivantes :
enfilage de la surface d'étanchéité (31) de l'au moins un moyen d'étanchéité (30) dans la rainure (12) du composant de turbomachine (10) ; et
liaison de l'au moins une bride de composant (11)à l'au moins une bride de composant complémentaire (21) par l'au moins un boulon (40) qui traverse l'ouverture (33) du moyen d'étanchéité.
